# EUROPÄISCHE PATENTSCHRIFT

(11) **EP 0 533 116 B1**
(45) Veröffentlichungstag und Bekanntmachung des Hinweises auf die Patenterteilung: **02.04.1997**
(21) Anmeldenummer: 92115783.0
(22) Anmeldetag: 16.09.1992
(51) Int. Cl.: F16L 11/12, F16L 11/02

(54) **Druckschlauch und Verfahren zum Herstellen eines solchen Druckschlauches**
Pressure hose and method of manufacturing such a pressure hose
Tuyau sous pression et procédé de fabrication d'un tel tuyau

(30) Priorität: 20.09.1991 DE 4131342; 21.08.1992 DE 4227721
(43) Veröffentlichungstag der Anmeldung: 24.03.1993
(73) Patentinhaber: PHOENIX AKTIENGESELLSCHAFT, 21079 Hamburg (DE)
(72) Erfinder: Simmen, Wolfgang, O-5801 Hörselgau (DE); Hebel, Heinz, Dipl.-Ing., O-5801 Schwarzhausen (DE); Schmidt, Peter, O-5812 Waltershausen (DE)

(56) Entgegenhaltungen:
- EP-A- 0 214 835
- EP-A- 0 356 911

## Beschreibung

Die Erfindung betrifft einen Druckschlauch, bestehend aus einem aus Kette und Schuß unter Köperbindung gebildeten Gewebe, wobei dieses ausschließlich mit einer Innenbeschichtung aus elastomerem Werkstoff (d.h. Gummi oder gummiähnlichem Werkstoff) versehen ist.

Druckschläuche bestehen zumeist aus einer Innenbeschichtung (Seele), einem eingebetteten Festigkeitsträger (z.B. Gewebe, Spiraldraht) und einer Außenbeschichtung (Mantel), wobei Innen- wie Außenbeschichtung aus elastomerem Werkstoff bestehen. Hinsichtlich dieses Schlauchaufbaues gibt es einen umfangreichen Stand der Technik, wobei beispielsweise auf die beiden Druckschriften EP-A-0 356 911 und EP-A-0 418 920 verwiesen wird. Hinsichtlich der Formstabilität sind derartigen Schläuchen jedoch häufig Grenzen gesetzt (z.B. als Feuerwehrschlauch), wobei auf dem Gebiet der Kanalsanierung Schläuche aus elastomerem Werkstoff mit eingebetteten Spezialverstärkungselementen und spezieller Oberflächengestaltung des Mantels entwickelt wurden, die selbst bei extremen Richtungswechseln formstabil sind (EP-A-0 356 911). Die Druckschrift EP-A-214 835 weist einen Druckschlauch aus einem aus Kette und Schuß gebildeten Gewebe auf, dessen Innenbeschichtung aus einem elastomerem Werkstoff besteht.

Bei dem gattungsgemäßen Schlauch fehlt jedoch die Außenbeschichtung völlig, so daß die Aufgabe nun darin besteht, auch bei einem derartigen Aufbau einen Druckschlauch bereitzustellen, der formstabil ist, wobei eine bleibende Verformung unter Druck von lediglich max. 5 % toleriert werden soll. Darüber hinaus soll der Schlauch ein möglichst geringes Gewicht aufweisen sowie bei Beschädigungen reparierbar sein.

Diese Aufgabe wird durch einen Gewebeschlauch entsprechend den Merkmalen des Patentanspruchs 1 gelöst. Zweckmäßigerweisegelten folgende Schußparameter:

| | |
|---|---|
| Durchmesser: | 0,9 bis 1,5 mm (insbesondere 1,1 bis 1,2 mm) |
| Schußdichte: | 50 bis 55 Schuß/10cm |
| Festigkeit: | ≥ 53 kp/mm² |
| Bruchdehnung: | ≤ 20 % |
| Kochschrumpf: | ≤ 0,9 % |
| Werkstoff: | Polyester |

Die Kette selbst besteht zweckmäßigerweise aus einem multifilen textilen Faden aus Polyester.

In diesem Zusammenhang sei erwähnt, daß die in den Patentansprüchen 1 und 8 angegebenen Merkmale, wie Kette, Schuß, Köperbindung, monofil und multifil allgemeine Begriffe aus der Gewebetechnologie sind und daher keiner näheren Erläuterung bedürfen.

Die Innenbeschichtung, die zweckmäßigerweise ≥ 1 mm beträgt, wird werkstoffmäßig so gewählt, daß eine gute Fäulnisbeständigkeit gewährleistet ist, insbesondere unter dem Gesichtspunkt des schwerpunktmäßigen Einsatzzweckes als Feuerwehrschlauch bzw. Wandhydrantenschlauch.

Im folgenden sind die Prüfergebnisse eines erfindungsgemäßen gewebten Druckschlauches festgehalten.

| | |
|---|---|
| Nennweite: | 26,3 mm |
| Wanddicke: | 3,1 mm |
| Gewicht: | 280,0 g/m |
| Prüfdruck: | 25 bar |
| Berstdruck: | > 50 bar |
| Verdrehung: | 240 °/20 m |
| Längung: | 2,0 % |
| Querdehnung: | 1,7 % |
| Knickung: | erfüllt |
| Trennkraft: | 1,0 N/mm |
| Statische Belastung: | 4,9 % |
| Verhalten bei Kälte: | erfüllt |
| Alterung: | erfüllt |
| Scheuerbeständigkeit: | 5 x erfüllt |
| Verhalten unter Flammwirkung: | 5 x erfüllt |
| Druckverlust : | 2,4 bar |
| Verhalten auf der Haspel: | Veränderungen wurden nicht festgestellt |

Auffallend ist dabei das relativ geringe Metergewicht von 280 g/m, wobei das Metergewicht eines Gummischlauches mit Innenbeschichtung, Festigkeitsträger und Außenbeschichtung in der Regel über 500 g/m liegt. Dies führt zu einer erheblichen Kosteneinsparung im Material- und Entsorgungsbereich.

Ferner sind festgestellte Schäden bei dem erfindungsgemäßen Schlauch durch Herausschneiden des schadhaften Stückes und Neueinbindung zu beheben. Beschädigungen an der Innenbeschichtung sind mit handelsüblichen Vulkanisiergeräten bzw. Reparaturmitteln zu beheben.

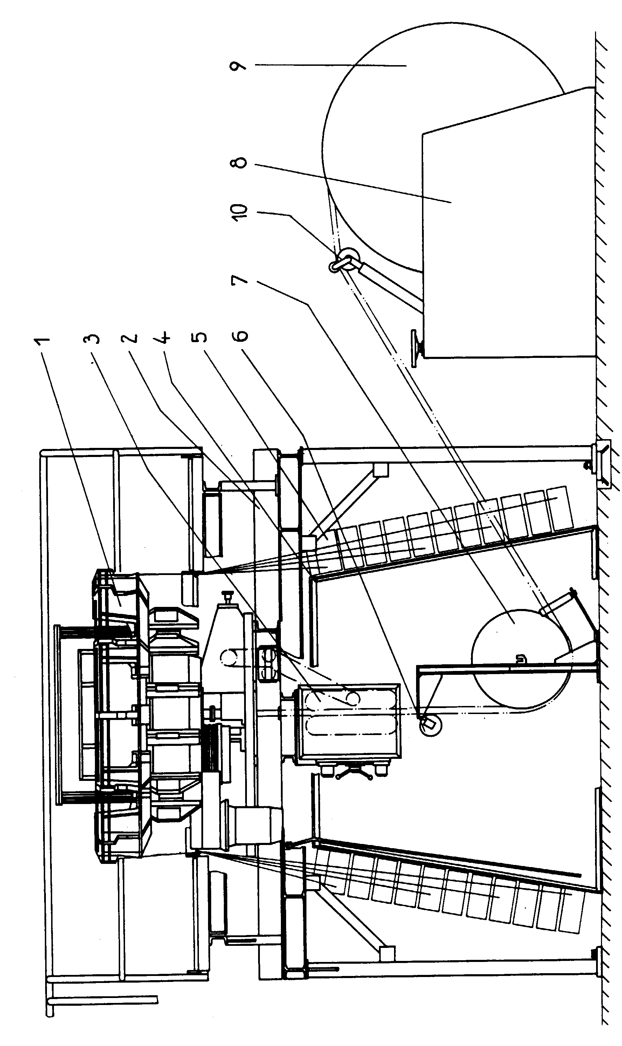

Eine weitere Aufgabe besteht nun darin, ein Verfahren zur Herstellung eines derartigen Gewebeschlauches bereitzustellen, wobei die hierzu erforderliche Vorrichtung im wesentlichen aus folgenden Teilen besteht, u.z. unter Bezugnahme auf die einzige Abbildung:
1 Webmaschine (Webstuhl)
2 Gestell
3 Raupenabzug
4 Spulengatter
5 Kettgarnspulen
6 Meterzähler
7 Umlenkung
8 Aufwickelvorrichtung
9 Wickeltrommel
10 Vorlageeinrichtung

Die wesentlichen Verfahrensschritte sind:
- zunächst wird die Schlauchseele durch Spritzgießen bzw. Extrusion hergestellt;
- danach erfolgt mittels der Webmaschine (1) durch Zuführung von Kette und Schuß die Gewebebildung, wobei während des Webprozesses die Schlauchseele eingewebt wird und wobei der Schuß aus einem textilen, monofilen Faden oder Draht besteht.

Dabei wird die Schlauchseele zweckmäßigerweise vor dem Weben vorvulkanisiert (z.B. Vulkanisationsgrad 75 %), wobei dann nach Beendigung des Webprozesses der Schlauch fertig vulkanisiert wird. Vulkanisiert wird auf einer üblichen Heiztafel.

Weitere zweckmäßige Verfahrensvarianten sind:
- vor dem Weben wird auf die Schlauchseele eine vulkanisierbare Haftmischung oder Haftlösung aufgetragen;
- die Kette wird paarweise von einem unter der Webmaschine (1) stehenden kegelförmigen Spulengatter (4) zugeführt;
- der Schlauch wird nach dem Webprozeß zwecks Erhalt seiner Geometrie durch einen Raupenabzug (3) abgezogen.

## Patentansprüche

1. Druckschlauch, bestehend aus
- einem aus Kette und Schuß unter Köperbindung gebildeten Gewebe, wobei dieses ausschließlich mit einer Innenbeschichtung aus elastomerem Werkstoff versehen ist, wobei
- der Schuß aus einem textilen, monofilen Faden oder Draht besteht.

2. Druckschlauch nach Anspruch 1, dadurch gekennzeichnet, daß der Durchmesser des Fadens oder Drahtes 0,9 bis 1,5 mm, insbesondere 1,1 bis 1,2 mm, beträgt.

3. Druckschlauch nach Anspruch 1 oder 2, dadurch gekennzeichnet, daß die Schußdichte 50 bis 55 Schuß/10 cm beträgt.

4. Druckschlauch nach einem der Ansprüche 1 bis 3, dadurch gekennzeichnet, daß die Festigkeit des Fadens oder Drahtes ≥ 53 kp/mm² beträgt.

5. Druckschlauch nach einem der Ansprüche 1 bis 4, dadurch gekennzeichnet, daß die Bruchdehnung des Fadens oder Drahtes ≤ 20 % beträgt.

6. Druckschlauch nach einem der Ansprüche 1 bis 5, dadurch gekennzeichnet, daß der Kochschrumpf des Fadens oder Drahtes ≤ 0,9 beträgt.

7. Druckschlauch nach einem der Ansprüche 1 bis 6, dadurch gekennzeichnet, daß der Faden oder Draht des Schusses aus Polyester besteht.

8. Druckschlauch nach einem der Ansprüche 1 bis 7, dadurch gekennzeichnet, daß die Kette aus einem multifilen textilen Faden besteht.

9. Druckschlauch nach einem der Ansprüche 1 bis 8, dadurch gekennzeichnet, daß die Kette aus Polyester besteht.

10. Druckschlauch nach einem der Ansprüche 1 bis 9, dadurch gekennzeichnet, daß die Innenbeschichtung eine Stärke von ≥ 1 mm aufweist.

11. Verfahren zum Herstellen eines Druckschlauches, insbesondere nach einem der Ansprüche 1 bis 11, gekennzeichnet durch folgende Verfahrensschritte:
- zunächst wird die Schlauchseele durch Spritzgießen bzw. Extrusion hergestellt;
- danach erfolgt mittels einer Webmaschine (1) durch Zuführung von Kette und Schuß die Gewebebildung, wobei während des Webprozesses die Schlauchseele eingewebt wird und wobei der Schuß aus einem textilen, monofilen Faden oder Draht besteht.

12. Verfahren nach Anspruch 11, dadurch gekennzeichnet, daß die Schlauchseele vor dem Weben vorvulkanisiert wird, wobei dann nach Beendigung des Webprozesses der Schlauch fertig vulkanisiert wird.

13. Verfahren nach Anspruch 12, dadurch gekennzeichnet, daß vor dem Weben auf die Schlauchseele eine vulkanisierbare Haftmischung oder Haftlösung aufgetragen wird.

14. Verfahren nach einem der Ansprüche 11 bis 13, dadurch gekennzeichnet, daß die Kette paarweise von einem unter der Webmaschine (1) stehenden kegelförmigen Spulengatter (4) zugeführt wird.

15. Verfahren nach einem der Ansprüche 11 bis 14, dadurch gekennzeichnet, daß der Schlauch nach dem Webprozeß zwecks Erhalt seiner Geometrie durch einen Raupenabzug (3) abgezogen wird.

## Claims

1. A pressure hose, consisting of
- a fabric formed of warp and weft by twill weaving, which is provided exclusively with an inner coating of elastomeric material,
- and the weft consists of a textile monofilament thread or twist.

2. A pressure hose as in Claim 1, characterized in that the diameter of the thread or twist amounts to 0.9 to 1.5 mm, in particular to 1.1 to 1.2 mm.

3. A pressure hose as in Claim 1 or 2, characterized in that the weft density amounts to 50 to 55 picks/10 cm.

4. A pressure hose as in one of the Claims 1 to 3, characterized in that the strength of the thread or twist amounts to ≥ 53 kp/mm².

5. A pressure hose as in one of the Claims 1 to 4, characterized in that the breaking elongation of the thread or twist amounts to ≤ 20%.

6. A pressure hose as in one of the Claims 1 to 5, characterized in that the boil shrinkage of the thread or twist amounts to ≤ 0.9.

7. A pressure hose as in one of the Claims 1 to 6, characterized in that the thread or twist of the weft consists of polyester.

8. A pressure hose as in one of the Claims 1 to 7, characterized in that the warp consists of a multifilament textile thread.

9. A pressure hose as in one of the Claims 1 to 8, characterized in that the warp consists of polyester.

10. A pressure hose as in one of the Claims 1 to 9, characterized in that the inner coating exhibits a thickness of ≥ 1 mm.

11. A method of production of a pressure hose, in particular as in one of the Claims 1 to 11, characterized by the following steps of the method:
- first of all the hose core is produced by injection moulding or extrusion;
- then by means of a loom (1) the formation of the fabric is effected through feeding in warp and weft, the hose core being woven in during the weaving process, and the weft consisting of a textile monofilament thread or twist.

12. A method as in Claim 11, characterized in that the hose core is prevulcanized before the weaving and after the conclusion of the weaving process the hose is finish-vulcanized.

13. A method as in Claim 12, characterized in that before the weaving a vulcanizable adhesive mixture or adhesive solution is applied to the hose core.

14. A method as in one of the Claims 11 to 13, characterized in that the warp is fed in pairs from a conical bobbin creel (4) standing under the loom (1).

15. A method as in one of the Claims 11 to 14, characterized in that for the purpose of the hose acquiring its geometry after the weaving process, it is pulled down by a caterpillar haul-off (3).

## Revendications

1. Tuyau flexible à l'épreuve de la pression, se composant
- d'un tissu formé d'une chaîne et d'une trame à armure croisée, ce tissu étant exclusivement garni d'un revêtement intérieur en matière élastomère,
- la trame étant faite d'un fil où filament textile monofilaire.

2. Tuyau flexible à l'épreuve de la pression selon la revendication 1, caractérisé en ce que le diamètre du fil ou filament textile est compris entre 0,9 et 1,5 mm, en particulier entre 1,1 et 1,2 mm.

3. Tuyau flexible à l'épreuve de la pression selon la revendication 1 ou 2, caractérise en ce que le duitage est de 50 à 55 duites/10 cm.

4. Tuyau flexible à l'épreuve de la pression selon l'une quelconque des revendications 1 à 3, caractérisé en ce que la résistance mécanique du fil ou filament textile est égale ou supérieure à 53 kp/mm².

5. Tuyau flexible à l'épreuve de la pression selon l'une quelconque des revendications 1 à 4, caractérisé en ce que l'allongement à la rupture du fil ou filament textile est égal ou inférieur à 20%.

6. Tuyau flexible à l'épreuve de la pression selon l'une quelconque des revendications 1 à 5, caractérisé en ce que le retrait à la cuisson du fil ou filament textile est égal ou inférieur à 0,9.

7. Tuyau flexible à l'épreuve de la pression selon l'une quelconque des revendications 1 à 6, caractérisé en ce que le fil ou filament textile de la trame est en polyester.

8. Tuyau flexible à l'épreuve de la pression selon l'une quelconque des revendications 1 à 7, caractérisé en ce que la chaîne est faite d'un fil textile multifilaire.

9. Tuyau flexible à l'épreuve de la pression selon l'une quelconque des revendications 1 à 3, caractérisé en ce que la chaîne est en polyester.

10. Tuyau flexible à l'épreuve de la pression selon l'une quelconque des revendications 1 à 9, caractérisé en ce que le revêtement intérieur a une épaisseur égale ou supérieure à 1 mm.

11. Procédé de fabrication d'un tuyau flexible à l'épreuve de la pression, en particulier selon l'une quelconque des revendications 1 à 11, caractérisé par les étapes opératoires suivantes:
- l'âme du tuyau flexible est d'abord fabriquée par moulage par injection ou extrusion;
- il est ensuite procédé à la formation du tissu au moyen d'un métier à tisser (1) par alimentation de la chaîne et de la trame, l'âme du tuyau flexible étant enrobée pendant le processus de tissage et la trame étant faite d'un fil ou filament textile monofilaire.

12. Procédé selon la revendication 11, caractérisé en ce que l'âme du tuyau flexible est pré-vulcanisée avant le tissage, le tuyau flexible étant ensuite vulcanisé définitivement après l'achèvement du processus de tissage.

13. Procédé selon la revendication 12, caractérisé en ce qu'avant le tissage, un mélange adhésif ou une solution adhésive vulcanisable est appliqué sur l'âme du tuyau flexible.

14. Procédé selon l'une quelconque des revendications 11 à 13, caractérisé en ce l'alimentation du fil de chaîne s'effectue par paires à partir d'un cantre à bobines (4) de forme conique, dressé au-dessous du métier à tisser (1).

15. Procédé selon l'une quelconque des revendications 11 à 14, caractérisé en ce qu'à la suite du processus de tissage, le tuyau flexible est tiré à travers une chenille de tirage (3) afin qu'il prenne sa forme géométrique.
